(19) Europäisches Patentamt
European Patent Office
Office européen des brevets

(11) **EP 4 400 757 A1**

(12) **EUROPEAN PATENT APPLICATION**
published in accordance with Art. 153(4) EPC

(43) Date of publication:
**17.07.2024 Bulletin 2024/29**

(21) Application number: **22933577.3**

(22) Date of filing: **29.07.2022**

(51) International Patent Classification (IPC):
**F16L 59/04** (2006.01)      **C04B 38/00** (2006.01)
**F16L 59/08** (2006.01)

(52) Cooperative Patent Classification (CPC):
(C-Sets available)
**C04B 30/02; C04B 28/26; C04B 38/0045;**
**F16L 59/04; F16L 59/08;** C04B 2111/00258;
C04B 2111/28; C04B 2111/40          (Cont.)

(86) International application number:
**PCT/JP2022/029291**

(87) International publication number:
**WO 2023/181443 (28.09.2023 Gazette 2023/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **25.03.2022 JP 2022049657**

(71) Applicant: **Sumitomo Riko Company Limited**
**Komaki-shi, Aichi 485-8550 (JP)**

(72) Inventors:
• **TAGUCHI, Yutaro**
  **Komaki-shi, Aichi 485-8550 (JP)**
• **KANDA, Shigeki**
  **Komaki-shi, Aichi 485-8550 (JP)**

(74) Representative: **Müller-Boré & Partner**
**Patentanwälte PartG mbB**
**Friedenheimer Brücke 21**
**80639 München (DE)**

(54) **THERMAL INSULATION MATERIAL**

(57)     A heat insulating member includes a heat insulating layer containing: a porous structure that has a plurality of particles connected to form a skeleton, has pores in an inside, and has a hydrophobic site on at least a surface between the surface and the inside; infrared shielding particles; and inorganic fibers, the heat insulating layer satisfying the following conditions (a) to (d). A content of each of components under the conditions (a) to (d) is calculated with a total mass of the heat insulating layer as 100% by mass. (a) A content of the inorganic fibers is 5% by mass or more and 25% by mass or less. (b) A content of the infrared shielding particles is 10% by mass or more. (c) A total content of the porous structure and the infrared shielding particles is 70% by mass or more. (d) A ratio of a content of the porous structure to the content of the infrared shielding particles is 1.2 or more.

FIG. 1

**(Cont. next page)**

(52) Cooperative Patent Classification (CPC): (Cont.)

C-Sets
**C04B 28/26, C04B 14/064, C04B 14/42,
C04B 18/146, C04B 14/305, C04B 14/324,
C04B 24/32, C04B 24/383, C04B 40/0259,
C04B 40/0263, C04B 38/0074, C04B 2103/406;
C04B 30/02, C04B 14/064, C04B 14/38,
C04B 18/146, C04B 14/305, C04B 14/324,
C04B 24/32, C04B 24/383, C04B 40/0259,
C04B 40/0263, C04B 38/0074**

**Description**

Technical Field

The present disclosure relates to a heat insulating member using a porous structure such as silica aerogels.

Background Art

Conventionally, various heat insulating members have been used for the purpose of heat flow control in automotive parts, residential building materials, industrial equipment, and the like. Silica aerogels, which have a low thermal conductivity, are known as a material for heat insulating members. For example, in a battery pack mounted on a hybrid vehicle, an electric vehicle, or the like, a heat insulating member is disposed between adjacent battery cells or the like. This type of heat insulating member is required to be highly heat insulating, especially at high temperatures, so that heat transfer can be prevented when battery cells generate abnormal heat, which makes it possible to prevent thermal runaway.

For example, Patent Literature 1 discloses a composite heat insulating member in which a heat insulating layer containing a silica aerogel, short silica fibers, and an infrared absorbing material is sandwiched between two base fabrics. Paragraph [0048] of Patent Literature 1 discloses that the infrared absorbing material is an effective heat retention material when it is desired to maintain a high temperature range of 400°C to 900°C. Patent Literature 2 discloses a heat insulating member having an aerogel fibrous body in which a fiber substrate is filled with a silica aerogel, and a porous covering layer that covers the aerogel fibrous body. Paragraphs [0052] and [0056] of Patent Literature 2 discloses that radiant heat from a heat source can be effectively blocked by blending an infrared reflecting agent or an infrared absorber into the aerogel fibrous body (heat insulating layer). Patent Literature 3 discloses a heat insulating member containing a silica aerogel, ceramic crystals, inorganic fibers, and an infrared functional agent. Paragraph [0041] of Patent Literature 3 discloses that silicon carbide and titanium oxide are effective in reducing radiant heat energy. Patent Literature 4 discloses a heat insulating member in which a silica aerogel powder having an average particle diameter of 0.01 mm to 4.0 mm and a silicon carbide powder having an average particle diameter of 2 $\mu$m are mixed. Paragraph [0016] of Patent Literature 4 discloses that thermal conductivity can be reduced by setting the mass ratio between the silicon carbide powder and the silica aerogel powder to more than 0 and less than 110 to 100.

Citation List

Patent Literature

    Patent Literature 1: PCT International Publication No. WO2021/095279
    Patent Literature 2: Japanese Patent Application Laid-Open No. 2009-299893
    Patent Literature 3: PCT International Publication No. WO2013/141189
    Patent Literature 4: Japanese Patent Application Laid-Open No. 2020-16326

SUMMARY OF INVENTION

Technical Problem

A silica aerogel has a plurality of fine silica particles connected to form a skeleton, and has pores smaller than the mean free path of air between the skeletons. Among three forms of heat transfer (conduction, convection, and radiation), mainly convection is prevented by this fine porous structure, thereby exhibiting high heat insulation. Radiation is a phenomenon in which heat is transferred by electromagnetic waves, and the higher the temperature, the greater the emitted radiant energy. Therefore, in a high-temperature atmosphere, radiation becomes the main factor of heat transfer. Accordingly, at high temperatures, it is difficult to obtain desired heat insulation with only a silica aerogel, and blending in infrared shielding particles is effective as disclosed in Patent Literature 1 to Patent Literature 4 described above.

However, when the infrared shielding particles are blended in, there is a risk of the formulation of heat transfer paths because the infrared shielding particles are connected to each other. Furthermore, when other materials such as inorganic fibers are blended in, the infrared shielding particles are connected to these materials, and heat transfer paths are more likely to be formed. As a result, the heat transfer due to conduction increases, and there is a risk of a deterioration in heat insulation. Therefore, the effect of preventing heat transfer at high temperatures cannot be sufficiently exhibited simply by blending in the infrared shielding particles. In this regard, Patent Literature 4 discloses the thermal conductivity of a mixture in which the silica aerogel powder and the silicon carbide powder, which have a predetermined particle diameter, are mixed at a predetermined ratio. However, Patent Literature 4 merely discloses that the thermal conductivity is measured only by changing the blending ratio while restricting the particle diameters of both powders, and conducted neither the examination of the filling state of particles and the formation of heat transfer paths nor the examination when inorganic fibers or the like are blended in.

The present disclosure has been made in view of such circumstances, and an objective thereof is to provide a heat insulating member that uses a porous structure such as silica aerogels and has high heat insulation even at high temperatures.

Solution to Problem

In order to achieve the above-mentioned objective, a heat insulating member of the present disclosure is characterized by including: a heat insulating layer containing a porous structure that has a plurality of particles connected to form a skeleton, has pores in an inside, and has a hydrophobic site on at least a surface between the surface and the inside, containing infrared shielding particles, and containing inorganic fibers, in which the heat insulating layer satisfies the following conditions (a) to (d). A content of each of components under the conditions (a) to (d) is calculated with a total mass of the heat insulating layer as 100% by mass.

> (a) A content of the inorganic fibers is 5% by mass or more and 25% by mass or less.
> (b) A content of the infrared shielding particles is 10% by mass or more.
> (c) A total content of the porous structure and the infrared shielding particles is 70% by mass or more.
> (d) A ratio of a content of the porous structure to the content of the infrared shielding particles is 1.2 or more.

Advantageous Effects of Invention

According to the heat insulating member of the present disclosure, by defining the blending amounts of the porous structure, the infrared shielding particles, and the inorganic fibers in the heat insulating layer as (a) to (d), both prevention of heat transfer due to radiation and prevention of formation of heat transfer paths are compatible. This enables to embody high heat insulation not only at room temperature but also at high temperatures.

Specifically, by satisfying the condition (a), the formation of heat transfer paths is prevented while exhibiting a reinforcing effect of the inorganic fibers. By satisfying the condition (b), the heat transfer due to radiation can be effectively prevented, which improves heat insulation at high temperatures. By satisfying the condition (c), the contents of the porous structure and the infrared shielding particles which contribute to the improvement of heat insulation are increased, thereby improving heat insulation. In addition, since the content of components that contribute little to the improvement of heat insulation is relatively small, the formation of heat transfer paths by these components is prevented, which improves heat insulation. By satisfying the condition (d), the connection between the infrared shielding particles can be inhibited by the porous structure. Accordingly, heat transfer paths are less likely to be formed, thereby improving heat insulation.

BRIEF DESCRIPTION OF DRAWINGS

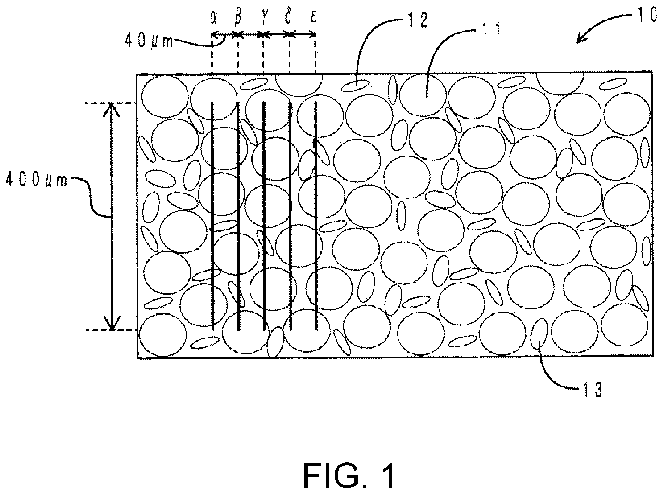

FIG. 1 is a schematic diagram for describing a method for measuring a standard number of a porous structure.

DESCRIPTION OF EMBODIMENTS

Hereinbelow, a heat insulating member of the present disclosure will be described in detail below. The heat insulating member of the present disclosure is not limited to the following aspects, and can be implemented in various aspects with modifications, improvements, and the like that can be made by those skilled in the art within a range not departing from the scope of the present disclosure.

<Heat insulating layer >

The heat insulating member of the present disclosure includes a heat insulating layer that has a porous structure, infrared shielding particles, and inorganic fibers, and satisfies the above-mentioned conditions (a) to (d).

[Porous structure]

The porous structure has a plurality of particles connected to form a skeleton, and has pores in an inside. It is desirable that the diameter of the particles (primary particles) forming the skeleton be about 2 to 5 nm, and that the size of the pores formed between the skeletons be about 10 to 50 nm. Many of the pores are so-called mesopores of 50 nm or less. Because mesopores are smaller than the mean free path of air, air convection is restricted, which inhibits heat transfer. The shape of the porous structure is not particularly limited, and may be a spherical shape, a clumped shape as an odd shape, or the like, but a chamfered shape or a spherical shape is desirable. In this case, because the dispersibility in liquids is improved, preparation of a composition for manufacturing the heat insulating layer (heat insulating layer composition) is facilitated. In addition, a filling amount can be increased by reducing voids between the porous structures, and also, the connection of the infrared shielding particles is prevented thereby, which makes it possible to improve heat insulation. The porous structure may be used in its manufactured state, or may be used after being further subjected to a pulverization treatment. For the pulverization treatment, a pulverizing device such as a jet mill, or a spheroidizing device may be used. By the pulverization treatment, the corners of the particles are removed, and the particles have a rounded shape. As a result, the surface of the heat insulating layer becomes smooth, and cracks are less likely to occur.

The average particle diameter of the porous structure is desirably about 1 to 200 $\mu$m. The larger the particle diameter of the porous structure, the smaller the surface area and the larger the pore volume. Therefore, the effect of improving heat insulation becomes significant. However, since the space between the porous structure and the porous structure is filled with the infrared shielding particles, when the particle diameter of the porous structure is large, there is a risk of an increase of a region in which the infrared shielding particles are not present. In this case, infrared rays emitted from a heat source hit the infrared shielding particles less frequently, and there is a risk of a deterioration in infrared shielding effect. For example, the average particle diameter of the porous structure is preferably 10 $\mu$m or more, or 50 $\mu$m or more, but is preferably 100 $\mu$m or less in consideration of the stability and the ease of application of the heat insulating layer composition. As the average particle diameter, a median diameter (D50) obtained from a volume-based particle diameter distribution measured by a laser diffraction/scattering method may be adopted. Catalog values may be adopted for commercially available products.

When the particle diameters of the porous structures are different, a small-diameter porous structure enters the space between large-diameter porous structures. Thus, the filling amount can be increased, and also, the connection of the infrared shielding particles can be inhibited by the small-diameter porous structure, thereby making the effect of improving heat insulation further significant. From this viewpoint, as the porous structure, it is desirable to use a porous structure having a wide particle diameter distribution, or to use two or more types of porous structures having different average particle diameters in combination. In addition, a part of large-diameter particles may be pulverized into small-diameter particles by adjusting the stirring conditions of materials in the process of manufacturing the heat insulating layer.

The content of the porous structure may be appropriately determined to satisfy the above-mentioned conditions (c) and (d) in consideration of the content of the infrared shielding particles that also contribute to the improvement of heat insulation. For example, when the total mass of the heat insulating layer is 100% by mass, the content of the porous structure alone is desirably 40% by mass or more, and is more suitably 50% by mass or more. Meanwhile, when the number of porous structures increases, there is a risk that the porous structures easily fall off. Therefore, when the total mass of the heat insulating layer is 100% by mass, the content of the porous structure alone is desirably 75% by mass or less, and is more suitably preferably 70% by mass or less.

From the viewpoint of embodying a suitable filling state of the porous structures in the heat insulating layer, for example, an aspect in which the standard number of the porous structures calculated by the following procedures (i) to (iii) is 10 or more, or 15 or more is desirable.

(i) A cross section of the heat insulating layer in a thickness direction is imaged with a scanning electron microscope (SEM) at a magnification of 200, and five straight lines each having a length of 400 $\mu$m are drawn in parallel at intervals of 40 $\mu$m on the obtained cross-sectional photograph.
(ii) The number of porous structures intersecting the straight line is counted for each drawn straight line, and a sum thereof is calculated.
(iii) The calculated sum is divided by 5 to obtain the standard number of the porous structures.

FIG. 1 shows a schematic diagram for describing a method for measuring the standard number of the porous structures. FIG. 1 does not at all limit the heat insulating layer, including the size, the shape, and the filling state of the porous structure and the like. As shown in FIG. 1, a porous structure 11, an infrared shielding particle 12, and an inorganic fiber 13 are observed in a cross-sectional photograph 10 obtained by imaging the cross section of the heat insulating layer in the thickness direction with an SEM at a magnification of 200. The procedure for measuring the standard number of the porous structure 11 is as follows. First, five straight lines $\alpha$, $\beta$, $\gamma$, $\delta$, and $\varepsilon$ are drawn on the cross-sectional photograph 10. The lengths of the five straight lines $\alpha$, $\beta$, $\gamma$, $\delta$, and $\varepsilon$ are all 400 $\mu$m, and the interval between the straight lines is 40 $\mu$m. Next, the number of porous structures 11 intersecting the straight line is counted for each of the five straight lines $\alpha$, $\beta$, $\gamma$, $\delta$, and $\varepsilon$, and a sum thereof is calculated. Then, the calculated sum is divided by 5 to obtain the standard number.

For example, when the number of porous structures 11 intersecting the drawn straight line is v for the straight line $\alpha$, is w for the straight line $\beta$, is x for the straight line $\gamma$, is y for the straight line $\delta$, and is z for the straight line $\varepsilon$, the standard number is "(v + w + x + y + z)/5". The standard number is an index indicating the filling state of the porous structures in the heat insulating layer. When the standard number is 10 or more, it can be determined that a state in which the particle diameter of the porous structure is not too large, and the space between the large-diameter porous structures is appropriately filled with the small-diameter porous structure, the infrared shielding particles, and the like is embodied.

The porous structure has a hydrophobic site on at least a surface between the surface and the inside. When the hydrophobic site is on the surface, the infiltration of water or the like into the pores can be prevented, and thereby the porous structure is maintained, and heat insulation is less likely to be impaired. For example, a function such as hydrophobicity can be imparted to the surface of the porous structure by a surface treatment with a silane coupling agent or the like. In addition, in the manufacturing process of the porous structure, a hydrophobic treatment such as imparting a hydrophobic group may be performed.

The type of the porous structure is not particularly limited. Examples of primary particles include silica, alumina, zirconia, and titania. Among them, a silica aerogel in which primary particles are silica, that is, a plurality of fine silica particles are connected to form a skeleton is desirable because of its excellent chemical stability. A cohesive structure in which a plurality of fumed fine silica particles are connected to form a skeleton is also suitable.

A method for manufacturing a silica aerogel is not particularly limited, and a drying step may be carried out at normal pressure or under supercritical conditions. For example, when a hydrophobization treatment is performed before the drying step, drying under supercritical conditions is not required, that is, the drying may be performed at normal pressure, making manufacturing possible more easily at low cost. Due to the difference in drying method when manufacturing an aerogel, one dried at normal pressure may be called "xerogel", and one dried under supercritical conditions may be called "aerogel", meaning that they are called by different names, but both are collectively called "aerogel" in the present specification.

[Infrared shielding particle]

The infrared shielding particles block radiant heat from a heat source by absorbing heat from the heat source and re-emitting it from the surface on the heat source side, thereby contributing to the improvement of heat insulation especially at high temperatures. It is desirable that the particle diameter of the infrared shielding particles be relatively small from the viewpoint that the space between the porous structures is filled therewith to prevent the connection between the infrared shielding particles and other components, thereby making it difficult to form heat transfer paths. Meanwhile, when the particle diameter is too small, it is difficult for infrared rays to hit, and scattering of infrared rays is also not sufficient, and thus the radiant heat shielding effect is less likely to be exhibited. From such a viewpoint, the average particle diameter of the infrared shielding particles is preferably 0.3 $\mu$m or more and 22 $\mu$m or less. Also as the average particle diameter of the infrared shielding particles, as in the case of the porous structure, a median diameter (D50) obtained from a volume-based particle diameter distribution measured by a laser diffraction/scattering method may be adopted, and catalog values may be adopted for commercially available products.

Examples of the infrared shielding particles include silicon carbide, kaolinite, montmorillonite, silicon nitride, mica, alumina, zirconia, aluminum nitride, titanium oxide, zirconium silicate, zinc oxide, tantalum oxide, tungsten oxide, niobium oxide, indium tin oxide, cerium oxide, boron carbide, manganese oxide, tin oxide, bismuth oxide, iron oxide, magnesium oxide, and barium titanate. Among these, from the viewpoint of improving the radiant heat shielding effect, it is desirable that the infrared shielding particles include high radiation rate particles having a radiation rate of 0.6 or more in an infrared wavelength range. Examples of the high radiation rate particles include silicon carbide, kaolinite, silicon nitride, mica, alumina, zirconia, aluminum nitride, zirconium silicate, cerium oxide, boron carbide, manganese oxide, tin oxide, and iron oxide. In addition, from the viewpoint of improving the radiant heat shielding effect by scattering incident infrared rays, an aspect in which particles having a high refractive index in an infrared wavelength range are provided is also effective. For example, high refractive index particles having a refractive index of 2.0 or more in a visible light wavelength range are suitable. Examples of the high refractive index particles include silicon carbide, titanium oxide, zirconia, silicon nitride, aluminum nitride, zinc oxide, tantalum oxide, tungsten oxide, niobium oxide, cerium oxide, manganese oxide, tin oxide, bismuth oxide, iron oxide, and barium titanate.

For example, silicon carbide, titanium oxide, silicon nitride, mica, alumina, aluminum nitride, boron carbide, iron oxide, magnesium oxide, and the like have large heat capacities because of relatively high specific heats, making the particles themselves less likely to become warm. This point also contributes to the improvement of the heat insulation of the heat insulating layer. In addition, high heat resistance also contributes to improving the heat resistance of the heat insulating layer. In particular, silicon carbide is suitable because an increase of the thermal conductivity thereof is low even in a high-temperature atmosphere of about 800°C.

The content of the infrared shielding particles is 10% by mass or more when the total mass of the heat insulating layer is 100% by mass (the above-mentioned condition (b)). From the viewpoint of improving the effect of preventing heat transfer due to radiation and further improving heat insulation at high temperatures, the content of the infrared shielding particles is preferably 15% by mass or more, or more preferably 20% by mass or more. Furthermore, the content of both the porous structure and the infrared shielding particles is 70% by mass or more when the total mass of the heat insulating layer is 100% by mass (the above-mentioned condition (c)). From the viewpoint of further improving heat insulation, the total content of the porous structure and the infrared shielding particles is preferably 75% by mass or more, or more preferably 80% by mass or more. In addition, the ratio of the content of the porous structure to the content of the infrared shielding particles [content of porous structure (% by mass)/content of infrared shielding particles (% by mass)] is 1.2 or more. (the above-mentioned condition (d)). By blending in 1.2 times or more of the porous structure with respect to the infrared shielding particles in terms of mass ratio, the porous structure inhibits the connection between the infrared shielding particles, which makes it possible to prevent the formulation of heat transfer paths. From the viewpoint of improving the effect of preventing heat transfer due to radiation by relatively increasing the content of the infrared shielding particles, the ratio of the content of the porous structure to the content of the infrared shielding particles is suitably 8 or less.

[Inorganic fiber]

The inorganic fibers are present by being physically entangled around the porous structure, thereby improving the mechanical strength of the heat insulating layer and preventing the falling off of the porous structure. Although the type of inorganic fibers is not particularly limited, glass fibers, ceramic fibers such as alumina fiber, and the like are suitable in consideration of heat resistance, mechanical strength, and the like. The content of the inorganic fibers is 5% by mass or more and 25% by mass or less when the total mass of the heat insulating layer is 100% by mass (the above-mentioned condition (a)). By setting the content of the inorganic fibers within this range, the reinforcing effect of the inorganic fibers is exhibited while excessive heat transfer paths are not formed. The length of the inorganic fiber is desirably 16 mm or less in consideration of both the reinforcing effect and the prevention of the formation of heat transfer paths.

[Other components]

The heat insulating layer may contain other components such as organic additives, reinforcing particles, or the like, in addition to the porous structure, the infrared shielding particles, and the inorganic fibers. In addition, there is an aspect of providing a binder that binds the components such as the porous structure together from the viewpoint that the self-supporting property of the heat insulating layer is secured, that is, the heat insulating layer alone can support its own weight, and the heat insulating layer alone can be handled. However, when the binder is present on the surface or in the space of the components such as the porous structure, there is a risk of the formation of heat transfer paths through the binder. Therefore, from the viewpoint of preventing the formation of heat transfer paths to embody high heat insulation at high temperatures, an aspect in which the heat insulating layer does not have a binder is desirable.

(1) Organic additives

The porous structure having a hydrophobic site on its surface or inside is less likely to be mixed with water. Among them, silica aerogel, hollow silica, fumed silica cohesive structure, and the like have a small specific gravity, and thus easily float on water. Therefore, it is desirable to blend in an organic additive from the viewpoint of improving the water-suspensibility of the porous structure to make it easier for the porous structure to be dispersed when preparing the heat insulating layer composition using water as a solvent, and from the viewpoint of adjusting the rheology and the water retentivity of the heat insulating layer composition according to methods for manufacturing the heat insulating layer.
As the organic additive, for example, a surfactant may be used. The type of surfactant is not particularly limited, and may be appropriately selected from ionic surfactants (cationic surfactants, anionic surfactants, amphoteric surfactants) and nonionic surfactants. For the surfactant, one type may be used alone, or two or more types may be used in combination. For example, when an ionic surfactant is used, even with a relatively small amount, the viscosity of the heat insulating layer composition can be increased, or the components such as the porous structure in the heat insulating layer composition can be dispersion stabilized. Examples of ionic surfactants include carboxymethylcellulose sodium (CMC-Na), polycarboxylic acid amine salts, polycarboxylic acid ammonium salts, polycarboxylic acid sodium salts, and TEMPO-oxidized cellulose nanofibers (CNF-Na). The use of the nonionic surfactant facilitates incorporation of the components such as the porous structure into a solvent when preparing the heat insulating layer composition. In addition, when these components are aggregated or separated in the heat insulating layer composition, redispersion becomes easy, and the solvent is easily discharged when the heat insulating layer is formed by drying. Examples of nonionic surfactants include polyethylene oxide (PEO) and polyvinyl alcohol (PVA). In addition, it is suitable to use the nonionic surfactant and the ionic surfactant in combination because the effects of each described above can be arbitrarily adjusted.

For example, the water retentivity of PEO is not very high. Therefore, water is less likely to enter the space between the porous structures when preparing the heat insulating layer composition, and voids are less likely to be generated when water evaporates during drying. As a result, the space between the porous structures are easily filled with the infrared shielding particles. In addition, the space between the large-diameter porous structures is easily filled with the small-diameter porous structures.

When the organic additive is blended in, there is a risk of a deterioration in heat insulation because a substance that is generated by decomposition or carbonization when exposed to high temperatures forms a heat transfer path. For example, when there is 50% by mass or less of a heating residue at 600°C, this is suitable because there are less products that deteriorates heat insulation at high temperatures. Specific examples thereof include PEO, CMC-Na, polycarboxylic acid amine salts, polycarboxylic acid ammonium salts, polycarboxylic acid sodium salts, TEMPO-oxidized cellulose nanofibers (CNF-Na), and PVA. The heating residue may be measured by thermogravimetric analysis (TGA). Specifically, about 5 mg of the organic additive is collected in a platinum pan and heated from room temperature to 600°C at a temperature rising rate of 20°C/minute under a nitrogen gas atmosphere, and the mass before and after heating is calculated by Formula (I) below.

$$\text{Heating residue (\%)} = W_1/W_0 \times 100 \qquad \text{(I)}$$

[$W_0$: sample mass before heating, $W_1$: sample mass after heating]

When the organic additive is present on the surface or in the space of the components such as the porous structure, there is a risk of the formation of heat transfer paths therethrough. Therefore, from the viewpoint of preventing the formation of heat transfer paths, it is desirable that the content of the organic additive be 10% by mass or less, or 7% by mass or less, when the total mass of the heat insulating layer is 100% by mass.

(2) Reinforcing particles

From the viewpoint of improving the mechanical strength of the heat insulating layer, reinforcing particles may be blended into the heat insulating layer. The type of the reinforcing particles is not particularly limited, but it is possible to use inorganic particles having relatively large hardness and specific surface area such as precipitated silica, gel silica, molten silica, wollastonite, potassium titanate, magnesium silicate, glassflake, calcium carbonate, and barium sulfate.

(3) Flame retardant

When a flame retardant is blended in, flame retardance can be imparted to the heat insulating layer. For the flame retardant, already known flame retardants such as halogen-based, phosphorus-based, and metal hydroxide-based flame retardants may be used. In consideration of the environmental load, it is desirable to use a phosphorus-based flame retardant. Examples of the phosphorus-based flame retardants include ammonium polyphosphate, red phosphorus, and phosphate esters. Among them, a water-insoluble one is desirable, for example, ammonium polyphosphate is suitable, because the flame retardant is less likely to flow out even when it comes into contact with water during use.

<Substrate>

It is sufficient for the heat insulating member of the present disclosure to include the above-mentioned heat insulating layer, and the configuration other than this is not particularly limited. For example, a configuration of including a substrate that supports the heat insulating layer can be adopted. In this case, the substrate may be disposed only on one side of the heat insulating layer in the thickness direction, or may be disposed on both sides to sandwich the heat insulating layer. In addition, a covering body that wraps the heat insulating layer with one sheet of the substrate may be used. An adhesive layer may be interposed between the heat insulating layer and the substrate. The adhesive layer may contain a flame retardant or the like in addition to an adhesive component.

Examples of materials of the substrate include cloths, resins, papers, and steel plates. Examples of fibers constituting cloths include glass fibers, rockwool, ceramic fibers, alumina fibers, silica fibers, carbon fibers, metal fibers, polyimide fibers, aramid fibers, and polyphenylene sulfide (PPS) fibers. Known ceramic fibers include refractory ceramic fibers (RCF), polycrystalline alumina fibers (Polycrystalline Wool: PCW), and alkaline earth silicate (AES) fibers. Among them, AES fibers are safer because they have biosolubility. Examples of resins include polyethylene terephthalate (PET), polyimide, polyamide, and PPS. Examples of papers include pulp, and combined materials of pulp and magnesium silicate. Examples of steel plates include galvalume steel plates (registered trademark), galvanized plates, stainless steel (SUS) plates, iron plates, and titanium plates. The shape of the substrate is not particularly limited, and examples thereof include woven fabrics, nonwoven fabrics, films, and sheets. The substrate may consist of a single layer, or may be a laminate in which two or more layers of the same material or different materials are laminated.

For example, fabrics (woven fabrics), such as glass cloth, manufactured from inorganic fibers such as glass fibers and metal fibers, nonwoven fabrics, and fire-resistant insulation paper manufactured as a combined material of pulp and magnesium silicate have a relatively low thermal conductivity, and their shape retainability is high even in a high-temperature atmosphere. In addition, when a substrate having high heat resistance is adopted, it can also be applied to usage that requires high heat resistance, which expands the usage of the heat insulating member of the present disclosure. Furthermore, when a fire-resistant substrate is adopted, safety is further improved. The substrate having high heat resistance may be manufactured from glass fibers, rockwool, ceramic fibers, polyimide, PPS, or the like, and specific examples thereof include glass fiber nonwoven fabric, glass cloth, aluminum glass cloth, AES wool paper, and polyimide fiber nonwoven fabric.

<Method for manufacturing heat insulating member>

The heat insulating member of the present disclosure can be manufactured by pressure-molding materials including the porous structure, the infrared shielding particles, the inorganic fibers, and the like. Alternatively, manufacturing can be performed by applying a liquid (including slurry) heat insulating layer composition to the substrate and drying it. For application, brush application may be used, and an applicator such as a blade coater, a bar coater, a die coater, a comma coater (registered trademark), and a roll coater; a spray; or the like may be used. Alternatively, manufacturing can be performed by immersing the substrate in the heat insulating layer composition, or forming the heat insulating layer composition on the substrate by a papermaking method. Drying may be performed at a temperature of 80°C to 180°C for several minutes to several tens of minutes.

The thickness of the heat insulating layer may be appropriately determined depending on usage, and is desirably 0.1 mm or more, 0.5 mm or more, or 1 mm or more, for example, from the viewpoint of heat insulation. When the heat insulating layer is too thick, it not only increases the cost but also reduces the strength, which cause brittleness. Therefore, 10 mm or less, or 8 mm or less is suitable, for example. In particular, from the viewpoint of thinning and enhancing flexibility, it is desirable that the thickness be 5 mm or less, or 3 mm or less.

[Examples]

Next, the present disclosure will be described more specifically with reference to examples.

(1) Manufacture of heat insulating member sample

A heat insulating member sample having the composition shown in Table 1 below was manufactured. First, a silica aerogel, infrared shielding particles, glass fibers, an organic additive, and reinforcing particles were put into a kneader ("Trimix (registered trademark)" manufactured by Inoue Seisakusho Co., Ltd.) and stirred and mixed for 1 minute. While continuing to stir as it is, water was added so that the solid content was 40% to 50%, and colloidal silica (aqueous dispersion liquid of silica particles; "LUDOX (registered trademark) LS" manufactured by Sigma-Aldrich) was added to samples (Comparative Examples 4 and 5 in Table 1 below) into which an inorganic binder was blended. Stirring and mixing were then further carried out for 15 minutes. Thereafter, while scraping off the material adhering to the inner wall of the container, the surface of the blade, and the like with a spatula by stopping stirring for every 2 minutes during stirring, stirring and mixing were carried out for an additional 30 minutes to produce a clay-like heat insulating layer composition.

Details of the materials used are as follows.

Silica aerogel powder: "Aerogel Particles P200" manufactured by Cabot Corporation, particle diameter 0.1 mm to 1.2 mm.

Glass fiber: "Wet Chop" manufactured by Nippon Electric Glass Co., Ltd., length 3 mm, filament diameter 6.5 $\mu$m.

Silicon carbide (SiC) powder: "FUJI RUNDUM GC" manufactured by Fuji Manufacturing Co., Ltd., particle diameter standard #4000.

Titanium oxide ($TiO_2$) powder: "High-purity titanium oxide HT0110" manufactured by Toho Titanium Co., Ltd.

PEO: Polyethylene oxide from Sigma-Aldrich, viscosity average molecular weight of up to one million.

CMC: Carboxylmethylcellulose sodium salt manufactured by Sigma-Aldrich, molecular weight 380,000.

Wet silica: "Nipsil (registered trademark) NS-K" manufactured by TOSOH SILICA CORPORATION

Next, a seat was prepared by stacking a first spacer plate made of SUS on glass fiber paper. The thickness of the first spacer plate was 4 mm, and a 150 mm square injection hole was formed in the center. The injection hole of the first spacer plate was filled with the produced heat insulating layer composition and formed into a plate shape. Thereafter, the first spacer plate was removed, another second spacer plate was disposed, and glass fiber paper was stacked thereon to manufacture a laminate consisting of "glass fiber paper/heat insulating layer composition/second spacer plate/glass fiber paper". The thickness of the second spacer plate was 3 mm, and a 150 mm square injection hole was formed in the center similarly to the first spacer plate. The heat insulating layer composition was disposed in the injection hole of the second spacer plate. Separately, a first plate member made of aluminum with a thickness of 5 mm and 320 mm square and a second plate member made of aluminum with a thickness of 1 mm and 320 mm square were prepared. A plurality of groove parts was formed on one surface of the first plate member. Each of the plurality of groove parts had a linear shape with a width of 2.5 mm, a depth of 3 mm, and a length of 200 mm, and was formed in parallel at intervals of 5 mm. Punching holes with a diameter of 1 mm were formed throughout the second plate member at intervals of 2 mm. A second plate member was stacked on one side of the first plate member, and the laminate was disposed thereon. Then, the second plate member was placed on the laminate, and the first plate member was further stacked so that one surface on which the groove parts were formed was on the side of the second plate member. In this state, pressure drying by hot press was performed for 30 minutes at a temperature of 165°C and a load of about 98 kN. Thereafter, air cooling was allowed to room temperature, and the first plate member, the second plate member, the upper and lower glass fiber papers, and the second spacer plate were removed to obtain a plate-shaped heat insulating member sample with a thickness of 3 mm.

Among the obtained heat insulating member samples, the standard number of silica aerogels was measured for the samples of Examples 1 and 3 in Table 1 below. A measurement method was as follows. First, a test piece of a predetermined size was cut out from the heat insulating member sample to carry out platinum coating as a pretreatment. Thereafter, using "Cross Section Polisher (registered trademark) SM09010" manufactured by JEOL Ltd., cross-section processing was performed at an acceleration voltage of 4 kV for 20 hours as a processing time. Next, the processed cross section was subjected to a conductive treatment with an osmium coat, and a cross-sectional photograph was imaged at an acceleration voltage of 15 kV and a magnification of 200 times as a backscattered electron image by "SEM S-3400N" manufactured by Hitachi, Ltd. Five straight lines each having a length of 400 $\mu$m were drawn in parallel at intervals of 40 $\mu$m on the obtained cross-sectional photograph, and the number of silica aerogels intersecting the straight line was counted for each of the drawn straight lines. Then, the number of silica aerogels was totaled, and this value was divided by 5 to obtain the standard number. As a result, the standard number of the sample of Example 1 was 26.4, and the standard number of the sample of Example 3 was 16.2.

(2) Measurement of thermal conductivity

Using a "Quick Thermal Conductivity Meter QTM-700" and a "High-temperature probe PD-31N" manufactured by KYOTO ELECTRONICS MANUFACTURING CO., LTD., the thermal conductivity of the manufactured heat insulating member sample was measured as follows. First, the heat insulating member sample was sandwiched between the upper side and the lower side of the probe in a state where two layers of the heat insulating member sample were stacked. A weight having a mass that does not crush the heat insulating member sample was put on from the above, and this probe was placed in an electric furnace. Then, the temperature inside the electric furnace was raised to 800°C, and after the temperature inside the furnace was stabilized, the thermal conductivity was measured.

(3) Evaluation of heat insulation

Table 1 shows the composition of the heat insulating member samples and the evaluation results of heat insulation based on the measurement results of thermal conductivity. In the evaluation of heat insulation, when the thermal conductivity was less than 0.3 W/m·K, this was regarded as a pass (indicated by O in the table), and when the thermal conductivity was 0.3 W/m·K or more, this was regarded as a fail (indicated by X in the table).

[Table 1]

| Heat insulating member sample | Evaluation of heat insulation | Composition | | | | | | | | | |
|---|---|---|---|---|---|---|---|---|---|---|---|
| | | Silica aerogel [% by mass] | (b) Infrared shielding particle | | (c) Silica aerogel + infrared shielding particle [% by mass] | (d) Silica aerogel/ infrared shielding particle | (a) Inorganic fiber | Organic additive | | Inorganic binder | Reinforcing particle |
| | | | SiC [% by mass] | $TiO_2$ [% by mass] | | | Glass fiber [% by mass] | PEO [% by mass] | CMC [% by mass] | Silica nanoparticle [% by mass] | Wet silica [% by mass] |
| Example 1 | O | 69 | 20 | 0 | 89 | 3.5 | 8 | 3 | 0 | 0 | 0 |
| Example 2 | O | 55 | 15 | 0 | 70 | 3.7 | 12 | 3 | 3 | 0 | 6 |
| Example 3 | O | 51 | 25 | 0 | 76 | 2.0 | is | 3 | 3 | 0 | 0 |
| Example 4 | O | 75 | 10 | 0 | 85 | 7.5 | 8 | 3.5 | 3.5 | 0 | 0 |
| Example 5 | O | 49 | 41 | 0 | 90 | 1.2 | 6 | 2 | 2 | 0 | 0 |
| Example 6 | O | 49 | 0 | 41 | 90 | 1.2 | 6 | 2 | 2 | 0 | 0 |
| Example 7 | O | 41 | 0 | 34 | 75 | 1.2 | 21 | 2 | 2 | 0 | 0 |
| Comparative Example 1 | X | 87 | 0 | 0 | 87 | - | 10 | 3 | 0 | 0 | 0 |
| Comparative Example 2 | X | 30 | 60 | 0 | 90 | 0.5 | 6 | 2 | 2 | 0 | 0 |
| Comparative Example 3 | X | 69 | 5 | 0 | 74 | 13.8 | 19 | 3.5 | 3.5 | 0 | 0 |
| Comparative Example 4 | X | 65 | 0 | 0 | 65 | - | 7 | 2.5 | 2.5 | 23 | 0 |
| Comparative Example 5 | X | 40 | 10 | 0 | 50 | 4.0 | 6 | 2 | 2 | 19 | 21 |

As shown in Table 1, the samples of Examples 1 to 7 that satisfied the above-mentioned conditions (a) to (d) all had a thermal conductivity of less than 0.3 W/m·K, and it was confirmed that they had excellent heat insulation even at high temperatures. In contrast, the sample of Comparative Example 1 did not contain the infrared shielding particles, and thus did not satisfy the conditions (b) to (d). In the sample of Comparative Example 2, the ratio of the content of the silica aerogel to the content of the infrared shielding particles was 0.5, which did not satisfy the condition (d). In the sample of Comparative Example 3, the content of the infrared shielding particles was 0.5% by mass, which did not satisfy the condition (b). The sample of Comparative Example 4 did not contain the infrared shielding particles, and thus did not satisfy the conditions (b) to (d). In the sample of Comparative Example 5, the total content of the silica aerogel and the infrared shielding particles was 50% by mass, which did not satisfy the condition (c). Therefore, all of the samples of Comparative Examples 1 to 5 had a thermal conductivity of 0.3 W/m·K or more, and could not obtain desired heat insulation at high temperatures.

Industrial Applicability

The heat insulating member of the present disclosure is suitable for a heat insulating member for vehicles, a heat insulating member for houses, a heat insulating member for electronic apparatuses, a heat insulating member for insulated containers, and the like. Among these, the heat insulating member of the present disclosure is suitable for use in battery packs, heat-not-burn cigarettes, fireproof heat insulating sheets, and the like, which require heat insulation in a high-temperature atmosphere.

Reference Signs List

10　Heat insulating layer (cross-sectional photograph)
11　Porous structure
12　Infrared shielding particle
13　Inorganic fiber

**Claims**

1. A heat insulating member **characterized by** comprising:

    a heat insulating layer containing

        a porous structure that has a plurality of particles connected to form a skeleton, has pores in an inside, and has a hydrophobic site on at least a surface between the surface and the inside,
        infrared shielding particles, and
        inorganic fibers,

    wherein the heat insulating layer satisfies the following conditions (a) to (d):

        (a) a content of the inorganic fibers is 5% by mass or more and 25% by mass or less,
        (b) a content of the infrared shielding particles is 10% by mass or more,
        (c) a total content of the porous structure and the infrared shielding particles is 70% by mass or more, and
        (d) a ratio of a content of the porous structure to the content of the infrared shielding particles is 1.2 or more, and

    a content of each of components under the conditions (a) to (d) is calculated with a total mass of the heat insulating layer as 100% by mass.

2. The heat insulating member according to claim 1,
    wherein a standard number that serves as an index indicating a filling state of the porous structure in the heat insulating layer and is calculated by the following procedures (i) to (iii) is 10 or more,

        (i) a cross section of the heat insulating layer in a thickness direction is imaged with a scanning electron microscope at a magnification of 200, and five straight lines each having a length of 400 μm are drawn in parallel at

intervals of 40 μm on the obtained cross-sectional photograph,

(ii) the number of the porous structures intersecting the straight line is counted for each of the drawn straight lines, and a sum thereof is calculated, and

(iii) the calculated sum is divided by 5 to obtain the standard number of the porous structure.

3. The heat insulating member according to claim 1 or 2, wherein the infrared shielding particles have an average particle diameter of 0.3 μm or more and 22 μm or less.

4. The heat insulating member according to any one of claims 1 to 3, wherein the infrared shielding particle includes a high radiation rate particle having a radiation rate of 0.6 or more in an infrared wavelength range.

5. The heat insulating member according to any one of claims 1 to 4, wherein the infrared shielding particle includes a high refractive index particle having a refractive index of 2.0 or more in a visible light wavelength range.

6. The heat insulating member according to any one of claims 1 to 5, wherein the heat insulating layer further contains an organic additive.

7. The heat insulating member according to claim 6, wherein the organic additive includes a surfactant.

8. The heat insulating member according to claim 7, wherein the surfactant includes a nonionic surfactant.

9. The heat insulating member according to claim 7, wherein the surfactant includes both a nonionic surfactant and an ionic surfactant.

10. The heat insulating member according to any one of claims 6 to 9, wherein the organic additive has a heating residue of 50% by mass or less at 600°C.

11. The heat insulating member according to any one of claims 1 to 10, wherein the inorganic fiber has a length of 16 mm or less.

12. The heat insulating member according to any one of claims 1 to 11, wherein the porous structure has a silica aerogel in which a plurality of fine silica particles is connected to form a skeleton.

13. The heat insulating member according to any one of claims 1 to 12, wherein the porous structure has a cohesive structure in which a plurality of fumed fine silica particles is connected to form a skeleton.

14. The heat insulating member according to any one of claims 1 to 13, wherein the heat insulating layer does not have a binder.

15. The heat insulating member according to any one of claims 1 to 14, further comprising a substrate laminated on the heat insulating layer.

16. The heat insulating member according to any one of claims 1 to 15, wherein the infrared shielding particle includes a silicon carbide particle.

17. The heat insulating member according to any one of claims 1 to 16, wherein the infrared shielding particle includes a titanium oxide particle.

FIG. 1

## INTERNATIONAL SEARCH REPORT

| International application No. |
|---|
| **PCT/JP2022/029291** |

**A. CLASSIFICATION OF SUBJECT MATTER**

*F16L 59/04*(2006.01)i; *C04B 38/00*(2006.01)i; *F16L 59/08*(2006.01)i
FI: F16L59/04; C04B38/00 301C; F16L59/08

According to International Patent Classification (IPC) or to both national classification and IPC

**B. FIELDS SEARCHED**

Minimum documentation searched (classification system followed by classification symbols)

F16L59/04; C04B38/00; F16L59/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2013/141189 A1 (IMAE INDUSTRY CO., LTD.) 26 September 2013 (2013-09-26) paragraphs [0017]-[0043], [0076]-[0078], [0089]-[0094] | 1-2, 6-8, 11-12, 16-17 |
| Y | paragraphs [0017]-[0043], [0076]-[0078], [0089]-[0094] | 3-17 |
| Y | WO 2021/095279 A1 (IMAE INDUSTRY CO., LTD.) 20 May 2021 (2021-05-20) paragraphs [0047]-[0050] | 3-17 |
| Y | JP 7-237957 A (IBIDEN CO LTD) 12 September 1995 (1995-09-12) paragraphs [0004]-[0008], [0021], [0026], [0029] | 3-17 |
| Y | JP 57-187512 A (YOSHIZAWA, Masao) 18 November 1982 (1982-11-18) p. 2, upper left column, lines 8-14 | 4-17 |
| Y | JP 2011-88125 A (ACRECO KK) 06 May 2011 (2011-05-06) paragraphs [0032]-[0033] | 4-17 |
| Y | JP 7-33551 A (NIPPON STEEL CHEM CO LTD) 03 February 1995 (1995-02-03) paragraphs [0006]-[0007] | 9-17 |

✓ Further documents are listed in the continuation of Box C.　　✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT

International application No.

**PCT/JP2022/029291**

### C. DOCUMENTS CONSIDERED TO BE RELEVANT

| Category* | Citation of document, with indication, where appropriate, of the relevant passages | Relevant to claim No. |
|-----------|-----------------------------------------------------------------------------------|----------------------|
| Y | JP 2015-529272 A (BASF SE) 05 October 2015 (2015-10-05)<br>paragraphs [0025]-[0027], [0052] | 9-17 |
| Y | JP 2010-176947 A (SONY CORP) 12 August 2010 (2010-08-12)<br>paragraphs [0068]-[0072], fig. 5 | 10-17 |
| Y | JP 2009-299893 A (NICHIAS CORP) 24 December 2009 (2009-12-24)<br>paragraphs [0017]-[0022], [0039]-[0041], [0050], [0105], [0110] | 13-17 |
| Y | JP 2021-143733 A (SUMITOMO RIKO CO LTD) 24 September 2021 (2021-09-24)<br>paragraph [0029], fig. 1 | 15-17 |
| A | CN 206943696 U (WH THERMAL TECHNOLOGY (SHANGHAI) CO., LTD.) 30 January 2018 (2018-01-30)<br>entire text, all drawings | 1-17 |
| A | WO 2016/163670 A1 (LG CHEM, LTD.) 13 October 2016 (2016-10-13)<br>entire text, all drawings | 1-17 |

Form PCT/ISA/210 (second sheet) (January 2015)

**INTERNATIONAL SEARCH REPORT**
Information on patent family members

International application No.

**PCT/JP2022/029291**

| Patent document cited in search report | | | Publication date (day/month/year) | Patent family member(s) | | | Publication date (day/month/year) |
|---|---|---|---|---|---|---|---|
| WO | 2013/141189 | A1 | 26 September 2013 | US 2014/0057083 A1 paragraphs [0024]-[0050], [0083]-[0085], [0101]-[0106] EP 2829527 A1 | | | |
| WO | 2021/095279 | A1 | 20 May 2021 | US 2022/0018485 A1 paragraphs [0084]-[0091] | | | |
| JP | 7-237957 | A | 12 September 1995 | (Family: none) | | | |
| JP | 57-187512 | A | 18 November 1982 | (Family: none) | | | |
| JP | 2011-88125 | A | 06 May 2011 | (Family: none) | | | |
| JP | 7-33551 | A | 03 February 1995 | (Family: none) | | | |
| JP | 2015-529272 | A | 05 October 2015 | WO 2014/044604 A1 US 2015/0252164 A1 paragraphs [0029]-[0032], [0069] EP 2897922 A CN 104661984 A KR 10-2015-0063465 A | | | |
| JP | 2010-176947 | A | 12 August 2010 | (Family: none) | | | |
| JP | 2009-299893 | A | 24 December 2009 | (Family: none) | | | |
| JP | 2021-143733 | A | 24 September 2021 | US 2021/0332932 A1 paragraph [0043], fig. 2 WO 2021/181932 A1 CN 113939487 A | | | |
| CN | 206943696 | U | 30 January 2018 | (Family: none) | | | |
| WO | 2016/163670 | A1 | 13 October 2016 | US 2018/0009969 A1 EP 3281968 A KR 10-2016-0120202 A CN 107406329 A | | | |

Form PCT/ISA/210 (patent family annex) (January 2015)

**EP 4 400 757 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021095279 A
- JP 2009299893 A
- WO 2013141189 A
- JP 2020016326 A